# EUROPÄISCHE PATENTSCHRIFT

(11) **EP 1 885 664 B1**
(45) Veröffentlichungstag und Bekanntmachung des Hinweises auf die Patenterteilung: **16.03.2011**
(21) Anmeldenummer: 06753595.5
(22) Anmeldetag: 13.05.2006
(51) Int. Cl.: C04B 41/80, C04B 41/81, C04B 41/85, C04B 41/87, C23C 24/00, B07B 1/46, C04B 41/50, C04B 35/58

(54) **VERFAHREN ZUR HERSTELLUNG EINER ABRIEBFESTEN REAKTIONSGEBUNDENEN KERAMISCHEN FILTERMEMBRAN**
METHOD FOR PRODUCING A WEAR-RESISTANT REACTION-BOUNDED CERAMIC FILTERING MEMBRANE
PROCEDE DE PRODUCTION D'UNE MEMBRANE FILTRANTE CERAMIQUE LIEE PAR REACTION ET RESISTANTE A L'USURE

(30) Priorität: 13.05.2005 DE 102005023053; 17.06.2005 DE 102005028452; 06.07.2005 DE 102005031856
(43) Veröffentlichungstag der Anmeldung: 13.02.2008
(73) Patentinhaber: Atech Innovations GmbH, 45966 Gladbeck (DE)
(72) Erfinder: BOLDUAN, Peter, 49549 Ladbergen (DE); CATANIA, Giovanni, 45891 Gelsenkirchen (DE); MUND, Peter, 48161 Münster (DE)
(74) Vertreter: Gesthuysen, von Rohr & Eggert
(86) Internationale Anmeldenummer: PCT/EP2006/004514
(87) Internationale Veröffentlichungsnummer: WO 2006/120021

(56) Entgegenhaltungen:
- WO-A-98/30315
- US-A- 5 364 586
- US-A- 5 655 212
- US-A1- 2002 074 282
- US-A1- 2003 166 449

## Beschreibung

Die Erfindung betrifft ein Verfahren nach dem Oberbegriff von Anspruch 1.

Keramische Filtermembranen, die man auch als Membranfilter bezeichnet, lassen sich vielseitig einsetzen, beispielsweise bei der Säuberung der Abluft, bei Gasreinigungsprozessen oder in Reinigungsprozessen der Nahrungsmittelbranche, der Getränkeindustrie, der pharmazeutischen Industrie, der chemischen Industrie, der Halbleiterfertigung, der Biotechnologie usw. sowie bei der Zurückgewinnung von Wertstoffen aus Abfällen etc.

In der Technik sind verschiedene Verfahren zur Herstellung von Beschichtungen für Träger, insbesondere zur Herstellung von porösen Filtrationsmembranen, bekannt. So offenbart die DE 43 28 295 A1 ein Verfahren zum Herstellen eines keramischen Siebfilters, wobei ein poröser anorganisch metallischer oder nicht-metallischer Träger mit einer Suspension versehen wird, die mindestens ein Beschichtungsmittel mit mindestens einem keramischen Rohstoff aufweist. Bei dem vorgenannten Verfahren können als Beschichtungsmittel keramische Rohstoffe, wie Oxide, Karbide und Nitride von Si, Al, Ti und Zr verwendet werden. Der so erhältliche Grünkörper wird für den Erhalt einer Phasenumwandlung zumindest des Beschichtungsmittels einer Hochdruck- und Hochtemperaturbehandlung ausgesetzt. Mit dem vorbekannten Verfahren lassen sich Sieb- oder Membranfilter herstellen mit einer definiert vorgebbaren Porengröße im Makro- bis Nanobereich. Hierbei kommt es zu einem epitaktischen Verwachsen zwischen dem Membranmaterial und dem Trägermaterial, woraus eine spannungsfreie, gefügestrukturelle Bindung resultiert, die neben einer hohen thermischen Stabilität auch zu einer hohen Temperatur-Wechselbeständigkeit führt.

In der DE 43 28 295 Al wird ein Hydrothermalverfahren beschirieben, das eine Hochdruck- und Hochtemperaturbehandlung in einem Autoklaven umfaßt, in dem Drücke zwischen 10 bar bis 200 bar und Temperaturen zwischen 200° C bis 700° C vorliegen. Der Druck im Autoklaven wird durch Wasserdampf erzeugt. In der Wasserdampfatmosphäre findet die Verbindung der Membranpartikel untereinander über Lösungs- und Rekristallisationsvorgänge statt. Das vorbekannte Verfahren erfordert jedoch einen hohen verfahrenstechnischen Aufwand und ist kostenintensiv ausführbar.

Aufgabe der vorliegenden Erfindung ist es, ein Verfahren zur Herstellung einer abriebfesten reaktionsgebundenen keramischen Filtermembran zur Verfugung zu stellen, das einfach und kostengünstig durchführbar ist und daß insbesondere zu keramischen Filtermembranen führt, die eine definiert vorgebbare, gleichmäßige Porenraumverteilung aufweisen, bei gleichzeitig sehr guter Haftung zwischen dem keramischen Rohstoff und dem Träger.

Die vorgenannte Aufgabe wird durch ein Verfahren nach Anspruch 1 gelöst.

Durch die Erfindung ist es möglich, reaktionsgebundene Keramiken unter Einsatz von Titannitrid als reaktiver Komponente bei geringen verfahrenstechnischen Aufwand und hoher mechanischer Stabilität der so erhältlichen Filtermembran herzustellen. Der nach dem erfindungsgemäßen Verfahren hergestellte Keramikfilter weist eine hohe Festigkeit mit einer definiert vorgebbaren Porengröße im Makro- bis Nanobereich auf. Eine aufwendige hydrothermale Behandlung, wie sie beim Stand der Technik vorgesehen ist, um Filtermembranen mit vergleichbaren Eigenschaften zu erhalten, ist erfindungsgemäß nicht notwendig. Das erfindungsgemäße Verfahren stellt gleichwohl das Zusammenwachsen der Membranpartikel untereinander sowie mit dem Trägermaterial sicher. Hieraus resultiert eine spannungsfreie, gefügestrukturelle Verbindung, die zu einer hohen Festigkeit der Bindung und einer hohen Beständigkeit der Filtermembran führt.

Als keramischer Rohstoff aus der Gruppe der Metallnitride wird Titannitrid verwendet. Es kann Titannitrid in reiner Form oder in einer Mischung aus unterschiedlichen Metallnitriden zum Einsatz kommen. Darüber hinaus kann die disperse Phase wenigstens einen weiteren keramischen Rohstoff aus der Gruppe der reinen Metalle, insbesondere Zirkonium und/oder Aluminium, enthalten. Der weitere keramische Rohstoff kann auch aus der Gruppe der Metalloxide ausgewählt werden, insbesondere ein Titan- und/oder Zirkonium- und/oder Aluminiumoxid. Beim Brennen des Grünkörpers kommt es bei Temperaturen zwischen 700°C und 1250°C zur Reaktion zwischen Titannitrid und dem weiteren keramischen Rohstoff, wobei Metalloxide gebildet werden. Die Phasenumwandlung ist vorzugsweise bei einer Temperatur von 800°C bis 1000°C durchführbar, was zu besonders guten mechanischen Eigenschaften der erfindungsgermäßen keramischen Filtermembran beiträgt.

Nitride sind auch als nicht-explosive Nanopulver verfügbar, so daß es erfindungsgemäß möglich ist, zur Herstellung von Ultrafiltrationsmembranen Metallnitride mit einer Partikelgröße von 0,005 µm bist 0,1 µm als disperse Phase einzusetzen. Grundsätzlich ist es natürlich auch möglich, Partikel mit einer Partikelgröße von > 0,1 µm zur Herstellung von Mikrofltrationsmembranen einzusetzen, Die nach dem erfindungsgemäßen Verfahren hergestellten Ultrafiltrationsmembranen weisen eine hohe Festigkeit gegen mechanische Oberflächen-Belastung (Abrieb) auf. Durch die hohe Festigkeit und Abriebbeständigkeit können keramische Filter bzw. Membranen in Anwendungen eingesetzt werden, bei denen nach Stand der Technik erhaltene Membranen abrasiv geschädigt bzw. zerstört würden. Darüber hinaus können Filter mit geringen Membran-Schichtdicken hergestellt werden, was dazu führt, daß der Transmembrandruck beim Filtrationsbetrieb gesenkt werden kann. Es versteht sich, daß auch größere Partikel zur Herstellung einer erfindungsgemäßen Filtermembran eingesetzt werden können, so daß die Partikelgröße der in der dispersen Phase enthaltenen Feststoffe 0,005 µm bis 5 µm betragen kann,

Der Anteil der dispersen Phase bzw, der Feststoffphase bezogen auf die Masse des Dispersionsmittels sollte vorzugsweise ca. 0,1 Gew.-% bis 20 gel.-% betragen. Dies trägt zu besonders bevorzugten mechanischen Eigenschaften der erfindungsgemäßen Filtermembran bei. Bei dem Dispersionsmittel kann es sich um Wasser und/oder wenigstens einen Alkohol und/oder wenigstens einen organischen Gelbildner handeln. Darüber hinaus kann ggf. wenigstens ein organisches Dispergierhilfsmittel verwendet werden. Der Anteil des organischen Gelbildners bezogen auf die Masse des Dispersionsmittels sollte vorzugsweise ca. 0,1 Gew.-% bis 5 Gew.-% betragen. Der Anteil des Dispergierhilfsmittels bezogen auf die Masse der dispersen Phase sollte vorzugsweise auf ca. 0,1 Gew.-% bis 100 Gew.-% eingestellt werden. Es versteht sich, daß es sich bei den vorgenannten Werten nur um bevorzugte Werte handelt, grundsätzlich also auch größere oder kleinere Anteile möglich sind.

Die Suspension kann durch Tauchen, Sprühen, Pinseln, Schleudern oder Hindurchpumpen durch einen vorzugsweise rohrförmigen Träger auf den Träger aufgebracht werden. Wird die Suspension durch Tauchen oder Pumpen auf den Träger aufgebracht, so beträgt die Kontaktzeit zwischen dem Träger und der Suspension vorzugsweise ca. 1 sec. bis 60 sec. Hierdurch kann eine ausreichende Beschichtung des Trägers bzw. das Eindringen der Suspension in das Trägermaterial in ausreichendem Maße sichergestellt werden.

Bei einer besonders bevorzugten Ausführungsform der Erfindung ist vorgesehen, daß der Grünkörper bzw. die Grünmembran vor dem Brennen unter atmosphärischen Druck und bei einer Temperatur von ca. 20°C bis 250°C getrocknet wird. Dies führt zu einer Vor-Verfestigung zwischen den Keramikpartikeln und dem Trägermaterial.

Um eine mehrschichtige Filtermembran herzustellen, kann erfindungsgemäß vorgesehen sein, daß der Träger mehrfach, vorzugsweise zweifach bis fünffach, insbesondere dreifach, mit der Suspension versehen wird. Weiter vorzugsweise ist vorgesehen, daß der Grünkörper nach jedem Aufbringen der Suspension erneut getrocknet und/oder gebrannt wird. Der Vorgang des Auftragens, Trocknens und Brennens kann somit ein- bis zu fünfmalig erfolgen, wobei die Brenntemperatur vorzugsweise bei jedem nachfolgenden Brennvorgang schrittweise abnimmt, um so eine definierte Porenstruktur mit abnehmender Porengröße zu erzeugen. Der zuerst gebildete Grünkörper kann beispielsweise bei einer Starttemperatur von 1.000°C bis 1.250°C, vorzugsweise bei 1.100°C, gebrannt werden. Der zuletzt gebildete Grünkörper kann dann bei einer eine Porengröße von 0,005 µm bis 5 µm festlegenden Endtemperatur gebrannt werden, wobei sich die Porengröße der Filtermembran durch gezieltes Kornwachstum über die Höhe der Brenntemperatur einstellen läßt. Mit dem erfindungsgemäßen Verfahren lassen sich somit Filtermembranen mit einer definierten Porengröße von 0,005 µm bis 5 µm und Schichtdicken zwischen 1 µm und 10 µm herstellen. Beim Brennen des Grünkörpers verwachsen die Nitrid-/Metall-Partikel an deren Kontaktstellen durch Phasenumwandlung in Oxide epitaktisch, und zwar ausgehend von der Partikeloberfläche ins Innere.

Die nachfolgend beschriebenen Beispiele betreffen bevorzugte Ausführungsformen des erfindungsgemäßen Verfahrens, wobei darauf hingewiesen wird, daß die erfindungsgemäße Lehre weder auf die aufgezeigte Komponentenauswahl noch auf die aufgezeigten Verfahrensbedingungen beschränkt ist.

### Beispiel 1:

TiN-Pulver wird im Verhältnis von ca. 1 : 50 mit Wasser, das einen organischen Gelbildner enthält, vermischt. Die so erhaltene Suspension wird durch Tauchen oder Sprühen auf einen keramischen Träger zur Abscheidung einer Grünmembran aufgebracht. Anschließend erfolgt das Brennen der Grünmembran im Ofen bei einer Temperatur von ca. 800 °C bis 1250°C, wobei eine poröse TiO₂-Mikro- oder Ultrafiltrationsmembran mit einem mittleren Porendurchmesser von etwa 0,05 µm bis 1,8 µm erhalten wird.

### Beispiel 2:

TiN-Pulver wird im Verhältnis von ca. 1 : 100 mit Propanol und einem organischen Gelbildner vermischt. Die so erhaltene Suspension wird durch Tauchen oder Sprühen auf einen keramischen Träger zur Abscheidung einer Grünmembran aufgetragen. Anschließend erfolgt das Brennen der Grünmembran im Ofen bei einer Temperatur von 500 °C bis 1000 °C, insbesondere bei einer Temperatur von > 700 °C bis 1000 °C, wobei eine poröse TiO₂-Ultrafiltrationsmembran mit einem mittleren Porendurchmesser von 0,02 µm bis 0,1 µm erhalten wird.

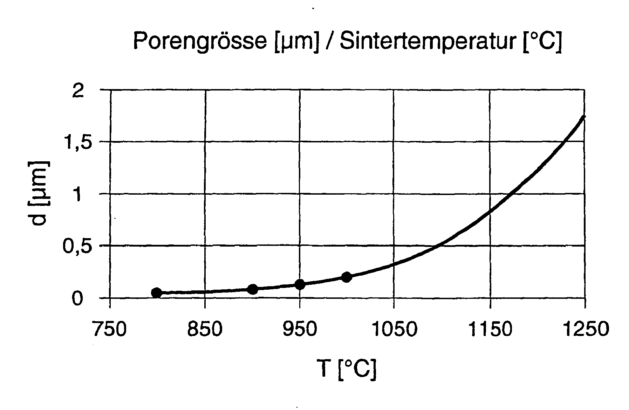

In der einzigen Figur der Zeichnung wird die Abhängigkeit des Porendurchmessers d einer nach dem erfindungsgemäßen Verfahren erhaltenen keramischen Filtermembran von dem Temperaturniveau des Brennvorgangs dargestellt. Aus der Figur ist zu entnehmen, daß die Porengröße bzw. der Porendurchmesser in Abhängigkeit von dem Temperaturniveau des Brennvorgangs einstellbar ist. Mit zunehmender Temperatur T steigt der Porendurchmesser d exponentiell an.

Im übrigen wird darauf hingewiesen, daß es im Zusammenhang mit der Erfindung zur Entwicklung eines Verfahrens gekommen ist, das den Nachweis der Anwendung des erfindungsgemäßen Verfahrens bei der Herstellung eines keramischen Filters bzw, die Verwendung einer erfindungsgemäßen Suspension ermöglicht. Das im Zusammenhang mit der Erfindung ermittelte Nachweisverfahren läßt es in einfacher und schneller Weise zu, keramische Filter darauf zu prüfen, ob diese nach dem erfindungsgemäßen Verfahren hergestellt worden sind, oder ob eine erfindungsgemäße Suspension eingesetzt worden ist.

Abschließend darf darauf hingewiesen werden, daß alle im Zusammenhang mit der Beschreibung der Erfindung genannten Bereichsangaben sämtliche Werte innerhalb der Bereichsangaben umfassen können, auch wenn dies im einzelnen nicht hervorgehoben worden ist.

## Patentansprüche

1. Verfahren zur Herstellung einer abriebfesten reaktionsgebundenen keramischen Filtermembran, wobei ein poröser metallischer oder nicht-metallischer Träger zur Herstellung eines Grünkörpers mit einer Suspension versehen wird, wobei die Suspension erhalten wird aus einem Dispersionsmittel und einer dispersen Phase und wobei die disperse Phase aus wenigstens einem keramischen Rohstoff aus der Gruppe der Metallnitride und ggf. wenigstens einem weiteren keramischen Rohstoff erhältlich ist, **dadurch gekennzeichnet, daß** der derart hergestellte Grünkörper für den Erhalt einer Phasenumwandlung zumindest des keramischen Rohstoffs bei einer Temperatur von 700 °C bis 1250 °C unter atmosphärischem Druck in oxidierender Atmosphäre gebrannt wird.

2. Verfahren nach Anspruch 1, **dadurch gekennzeichnet, daß** als keramischer Rohstoff aus der Gruppe der Metallnitride wenigstens ein Nitrid der Metalle Titan und/oder Zirkonium und/oder Aluminium verwendet wird.

3. Verfahren nach Anspruch 1 oder 2, **dadurch gekennzeichnet, daß** der weitere keramische Rohstoff aus der Gruppe der Metalle, insbesondere Titan und/oder Zirkon und/oder Aluminium, und/oder aus der Gruppe der Metalloxide, insbesondere Titan und/oder Zirkonium und/oder Aluminium, ausgewählt wird.

4. Verfahren nach einem der vorhergehenden Ansprüche, **dadurch gekennzeichnet, daß** die Phasenumwandlung bei 800 °C bis 1000 °C durchgeführt wird.

5. Verfahren nach einem der vorhergehenden Ansprüche, **dadurch gekennzeichnet, daß** ein keramischer Rohstoff und/oder ein weiterer keramischer Rohstoff mit einer Partikelgröße zwischen 0,005 µm bis 5 µm ausgewählt wird.

6. Verfahren nach einem der vorhergehenden Ansprüche, **dadurch gekennzeichnet, daß** der Anteil der dispersen Phase bezogen auf die Masse des Dispersionsmittels 0,1 Gew.-% bis 20 Gew.-% eingestellt wird.

7. Verfahren nach einem der vorhergehenden Ansprüche, **dadurch gekennzeichnet, daß** als Dispersionsmittel Wasser und/oder wenigstens ein Alkohol und/oder wenigstens ein organischer Gelbildner und ggf. wenigstens ein organisches Dispergierhilfsmittel verwendet wird.

8. Verfahren nach einem der vorhergehenden. Ansprüche, **dadurch gekennzeichnet, daß** der Anteil des organischen Gelbildners bezogen auf die Masse des Dispersionsmittels auf 0,1 Gew.-% bis 5 Gew.-% eingestellt wird.

9. Verfahren nach einem der vorhergehenden Ansprüche, **dadurch gekennzeichnet, daß** der Anteil des Dispergierhilfsmittels bezogen auf die Masse der dispersen Phase auf 0,1 Gew.-% bis 100 Gew,% eingestellt wird.

10. Verfahren nach einem der vorhergehenden Ansprüche, **dadurch gekennzeichnet, daß** die Suspension durch Tauchen, Sprühen, Pinseln, Schleudern oder Hindurchpumpen durch einen vorzugsweise rohrförmigen Träger auf den Träger aufgebracht wird.

11. Verfahren nach einem der vorhergehenden Ansprüche, **dadurch gekennzeichnet, daß** die Kontaktzeit zwischen dem Träger und der Suspension beim Tauchen oder Pumpen zwischen 1 s bis 60 s eingestellt wird.

12. Verfahren nach einem der vorhergehenden Ansprüche, **dadurch gekennzeichnet, daß** der Grünkörper vor dem Brennen getrocknet wird, vorzugsweise bei einer Temperatur von 20 °C bis 250 °C und bei atmosphärischem Druck.

13. Verfahren nach einem der vorhergehenden Ansprüche, **dadurch gekennzeichnet, daß** der Träger mehrfach mit der Suspension versehen wird, wobei, vorzugsweise, der Grünkörper nach jedem Aufbringen der Suspension getrocknet und/oder gebrannt wird.

14. Verfahren nach einem der vorhergehenden Ansprüche, **dadurch gekennzeichnet, daß** die Brenntemperatur bei jedem der aufeinanderfolgenden Brennvorgänge schrittweise gesenkt wird, um eine Porenstruktur der Filtermembran mit abnehmender Porengröße zu erzeugen,

15. Verfahren nach einem der vorhergehenden Ansprüche, **dadurch gekennzeichnet, daß** der zuerst gebildete Grünkörper bei einer Starttemperatur von 1000 °C bis 1250 °C, vorzugsweise bei 1100 °C, gebrannt wird und daß der zuletzt gebildete Grünkörper bei einer eine Porengröße von 0,005 µm bis 5 µm festlegenden Endtemperatur gebrannt wird.

## Claims

1. Method for producing a wear-resistant reaction-bound ceramic filtering membrane, wherein a porous metallic or non-metallic support is provided with a suspension for the production of a green body, wherein the suspension is obtained from a dispersing agent and a disperse phase, and wherein the disperse phase can be obtained from at least one ceramic raw material of the group of metal nitrides and optionally at least one further ceramic raw material, **characterized in that** the green body produced in this manner is baked at a temperature of 700°C to 1250°C under atmospheric pressure in oxidizing atmosphere for obtaining a phase change of at least the ceramic raw material,

2. Method according to claim 1, **characterized in that** at least a nitride of the metals titanium and/or zirconium and/or aluminium is used as ceramic raw material of the group of metal nitrides.

3. Method according to claim 1 or 2, **characterized in that** the further ceramic raw material is selected from the group of metals, in particular titanium and/or zirconium and/or aluminum, and/or from the group of metal oxides, in particular titanium and/or zirconium and/or aluminum.

4. Method according to any one of the preceding claims, **characterized in that** the phase change is performed at 800 °C to 1000 °C.

5. Method according to any one of the preceding claims, **characterized in that** a ceramic raw material and/or a further ceramic raw material with a particle size of between 0.005 µm to 5 µm is selected.

6. Method according to any one of the preceding claims, **characterized in that** the proportion of the disperse phase with respect to the mass of the dispersing agent is set as 0.1 wt. % to 20 wt. %.

7. Method according to any one of the preceding claims, **characterized in that** water and/or at least one alcohol and/or at least one organic gel-forming agent and optionally at least one organic dispersing agent is used as a dispersing agent.

8. Method according to any one of the preceding claims, **characterized in that** the proportion of the organic gel-forming agent with respect to the mass of the dispersing agent is set as 0.1 wt. % to 5 wt. %.

9. Method according to any one of the preceding claims, **characterized in that** the proportion of the dispersing agent with respect to the mass of the disperse phase is set as 0.1 wt. % to 100 wt. %.

10. Method according to any one of the preceding claims, **characterized in that** the suspension is applied onto the support by dipping, spraying, brushing, slinging or pumping through a preferably tubular support.

11. Method according to any one of the preceding claims, **characterized in that** the contact time between the support and the suspension at dipping or pumping is set at between 1 s to 60 s.

12. Method according to any one of the preceding claims, **characterized in that** the green body is dried before baking, preferably at a temperature of approximately 20°C to 250°C and at atmospheric pressure.

13. Method according to any one of the preceding claims, **characterized in that** the support is provided with the suspension multiple times, wherein, preferably, the green body is dried and/or backend after each application of the suspension.

14. Method according to any one of the preceding claims, **characterized in that** the baking temperature is decreased stepwise at each one of the successive baking processes in order to produce a pore structure of the filtering membrane with decreasing pore size.

15. Method according to any one of the preceding claims, **characterized in that** the initially formed green body is baked at a starting temperature of 1000 °C to 1250 °C, preferably at 1100 °C and that the last formed green body is baked at a final temperature which determines a pore size of 0.005 µm to 5 µm.

## Revendications

1. Procédé de fabrication d'une membrane de filtration en céramique résistante à l'usure, liée par réaction, dans lequel un support poreux métallique ou non-métallique est doté d'une suspension pour la préparation d'un précurseur cru, la suspension étant obtenue à partir d'un agent dispersif et d'une phase dispersée et la phase dispersée pouvant être obtenue en au moins une matière première céramique du groupe des nitrures métalliques et le cas échéant en au moins une autre matière première céramique, **caractérisé en ce que**, pour l'obtention d'une transformation de phase d'au moins la matière première céramique, le précurseur cru ainsi fabriqué est cuit à une température de 700 °C à 1250 °C sous la pression atmosphérique dans une atmosphère oxydante.

2. Procédé selon la revendication 1, **caractérisé en ce que** l'on utilise comme matière première céramique du groupe des nitrures métalliques au moins un nitrure des métaux titane et/ou zirconium et/ou aluminium.

3. Procédé selon la revendication 1 ou 2, **caractérisé en ce que** l'autres matière première céramique est choisie parmi le groupe des métaux, en particulier du titane et/ou du zirconium et/ou de l'aluminium, et/ou parmi le groupe des oxydes métalliques, en particulier de titane et/ou de zirconium et/ou d'aluminium.

4. Procédé selon l'une quelconque des revendications précédentes, **caractérisé en ce que** la transformation de phase est effectuée entre 800 °C et 1000 °C.

5. Procédé selon l'une quelconque des revendications précédentes, **caractérisé en ce qu'**une matière première céramique et/ou une autre matière première céramique sont choisies avec une taille de particule comprise entre 0,005 µm et 5 µm.

6. Procédé selon l'une quelconque des revendications précédentes, **caractérisé en ce que** la quote-part de la phase dispersée, rapportée à la masse de l'agent dispersant, est réglée entre 0,1 % en poids et 20 % en poids.

7. Procédé selon l'une quelconque des revendications précédentes, **caractérisé en ce que** l'on utilise comme agent dispersant de l'eau et/ou au moins un alcool et/ou au moins un générateur organique de gel et, le cas échéant, au moins un auxiliaire organique de dispersion.

8. Procédé selon l'une quelconque des revendications précédentes, **caractérisé en ce que** la quote-part du générateur organique de gel, rapportée à la masse de l'agent dispersant, est réglée entre 0,1 % en poids et 5 % en poids.

9. Procédé selon l'une quelconque des revendications précédentes, **caractérisé en ce que** la quote-part de l'auxiliaire de dispersion, rapportée à la masse de la phase dispersée, est réglée entre 0,1 % en poids et 100 % en poids.

10. Procédé selon l'une quelconque des revendications précédentes, **caractérisé en ce que** la suspension est appliquée sur le support par immersion, pulvérisation, application au pinceau, centrifugation ou pompage traversant à travers un support de préférence tubulaire.

11. Procédé selon l'une quelconque des revendications précédentes, **caractérisé en ce que**, lors de l'immersion ou du pompage, le temps de contact entre le support et la suspension est réglé entre 1 s et 60 s.

12. Procédé selon l'une quelconque des revendications précédentes, **caractérisé en ce que** le précurseur cru est séché avant la cuisson, de préférence à une température entre 20 °C et 250 °C et sous la pression atmosphérique.

13. Procédé selon l'une quelconque des revendications précédentes, **caractérisé en ce que** le support est doté plusieurs fois de la suspension, le précurseur cru étant séché et/ou cuit après chaque application de la suspension.

14. Procédé selon l'une quelconque des revendications précédentes, **caractérisé en ce qu'**à chacun des processus de cuisson consécutifs, la température de cuisson est graduellement abaissée pour engendrer une structure des pores de la membrane filtrante avec des tailles de pore décroissantes.

15. Procédé selon l'une quelconque des revendications précédentes, **caractérisé en ce que** le précurseur cru formé d'abord est cuit à une température de démarrage de 1000 °C à 1250 °C, de préférence 1100°C et **en ce que** le précurseur cru formé en dernier est cuit à une température fixant une taille de pores de 0,005 µm à 5 µm,
